(19) Europäisches Patentamt

European Patent Office

Office européen des brevets

(11) **EP 1 241 620 A2**

## (12) EUROPEAN PATENT APPLICATION

(43) Date of publication:
**18.09.2002 Bulletin 2002/38**

(51) Int Cl.7: **G06T 15/70**

(21) Application number: **02251012.7**

(22) Date of filing: **14.02.2002**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI**<br><br>(30) Priority: **28.02.2001 GB 0104994**<br><br>(71) Applicant: **Nokia Corporation**<br>**02150 Espoo (FI)**<br><br>(72) Inventors:<br>• **Kraft, Christian**<br>**2650 Hvidovre (DK)**<br>• **Benner, Jens**<br>**2100 Copenhagen (DK)**<br>• **Nymark, Niels**<br>**3400 Hilleroed (DK)** | • **Mccarthy, Kevin**<br>**3500 Vaerloese (DK)**<br>• **Andersen, Thomas**<br>**2800 Lyngby (DK)**<br>• **Sorensen, Lone Tram**<br>**4000 Roskilde (DK)**<br>• **Meulengracht, Jesper**<br>**2820 Gentofte (DK)**<br>• **Nielsen, Peter Dam**<br>**2700 Broenshoej (DK)**<br>• **Keldebaek, Morten**<br>**2800 Lyngby (DK)**<br><br>(74) Representative: **Haws, Helen**<br>**Nokia IPR Department,**<br>**Nokia House,**<br>**Summit Avenue**<br>**Farnborough, Hampshire GU14 0NG (GB)** |

(54) **A communication terminal handling animations**

(57) A communication terminal having a processor, transceiver means for communication via a wireless network, and a display. The processor is adapted to generate animation in said display by displaying a sequence of images. There is provided means for editing of at least one of the images prior to the generating of the animation. There is provided means for successively displaying said sequence of images in a predetermined order and with predetermined intervals between the images.

Fig. 3

EP 1 241 620 A2

## Description

The invention relates to a communication terminal handling animations. These animations are shown in the display.

During recent years animation has come to cellular phones. In the beginning animations were used to indicate an on-going activity - e.g. that charging is on-going by means of letting the battery bar repeatably increase up and then disappear. Animations have also been used when turning the phone on and off. Also here animations were used to indicate that an activity is on-going. Animations have also been used to improve the appearance of the menu items.

However there is a need for allowing the user to handle animations in a communication terminal in a way so the user may select the animation, edit the animation and use it in a personalized way.

Basically animation may be regarded as a simulation of a movement created by displaying a series of pictures, images, or frames. Cartoons on television are one example of animation. Animation on computers and communication terminals is one of the chief ingredients of multimedia presentations. There are many software applications that enable you to create animations that you can display on a computer monitor. An animation starts with independent pictures and puts them together to form the illusion of continuous motion.

According to a preferred aspect of the invention there is provided a method of generating animation by displaying a sequence of images in a communication terminal. The method includes editing of at least one of the images prior to the generating of the animation, and successively displaying said sequence of images in a predetermined order and with predetermined intervals between the images. Hereby the user may download animation via a WAP (Wireless Application Protocol) application to his phone, resize the animation so it fits to the capabilities of the application using the animation in the communication terminal. The application using the animation may be a "screen saver" application displaying the animation when the phone has been in idle mode a few seconds. Furthermore the animations may be used instead of the still pictures used in picture messages introduced with the phones sold under the trademark Nokia 3210.

According to a second aspect of the invention a communication terminal is provided with a processor, transceiver means for communication via a wireless network, and a display, said processor is adapted to generate animation in said display by displaying of sequence of images. The communication terminal comprises means for editing of at least one of the images prior to the generating of the animation; and means for successively displaying said sequence of images in a predetermined order and with predetermined intervals between the images. Hereby the communication terminal is able to personalize a received animation by resizing the animation, adding text or amending details of the animation.

The sequence of images is preferably displayed repeatedly for a number of times, and the user of the communication terminal sets said number of times the display of the sequence of images has to be repeated.

The communication terminal may compare this number of times the display of the sequence of images has to be repeated with a predetermined number. If said number of times the display of the sequence of images has to be repeated exceeds said predetermined number, the communication terminal only repeats the display sequence said predetermined number of times.

Preferably the communication terminal repeats the display sequence said predetermined number of times once more every time the communication terminal is activated afterwards.

According to a further aspect of the invention the editing of at least one of the images prior to the generating of the animation includes resizing the images into a display size being specific for an application in the communication terminal in which the animation has to be used.

Furthermore the editing of at least one of the images prior to the generating of the animation includes displaying of the images as bit-map pattern, and changing said bit-map pattern under control of the user of the communication terminal, storing the edited image, transferring the changes to the remaining images of the sequence.

For a better understanding of the present invention and to understand how the same may be brought into effect reference will now be made, by way of example only, to accompanying drawings, in which: -

Fig. 1 schematically illustrates a preferred embodiment of a hand portable phone according to the invention.

Fig. 2 schematically shows the essential parts of a telephone for communication with e.g. a cellular network.

Fig. 3 shows the two displays illustrating how animation is resized according to a preferred embodiment of the invention.

Fig. 4 shows how animation is provided by means of individual images.

Fig. 5 schematically illustrates two images being edited by adding text to the animation.

Fig. 6 illustrates how to provide a moving animation based on the animation explained with reference to fig. 4.

Fig. 7 shows schematically the way of working for an animation editor according to a further embodiment of the invention.

Fig. 8 is a flow chart showing how animation is downloaded resized and saved according to a preferred embodiment of the invention.

Fig. 9 illustrates the menu structure in the animation menu according to a preferred embodiment of the invention.

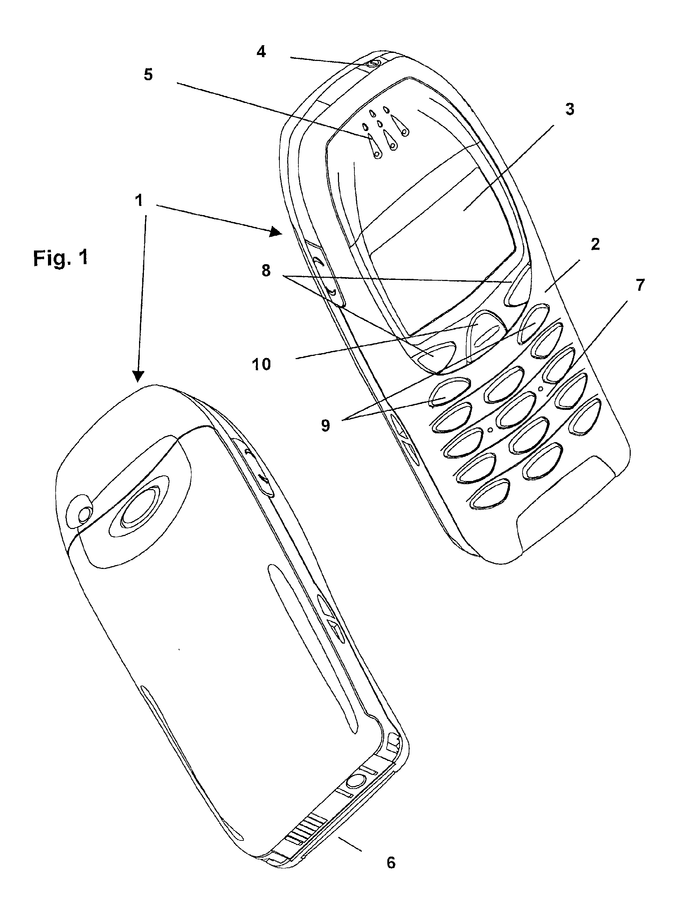

Fig. 1 shows a preferred embodiment of a phone according to the invention, and it will be seen that the phone, which is generally designated by 1, comprises a user interface having a keypad 2, a display 3, an on/off button 4, a speaker 5 (only openings are shown), and a microphone 6 (only openings are shown). The phone 1 according to the preferred embodiment is adapted for communication via a cellular network, but could have been designed for a cordless network as well.

According to the preferred embodiment the keypad 2 has a first group 7 of keys as alphanumeric keys, two soft keys 8, and a navigation key 10. Furthermore the keypad includes two call-handling keys 9 for initiating and terminating calls. The present functionality of the soft keys 8 is shown in separate fields in the display 3 just above the keys 8. This key layout is characteristic of e.g. the Nokia 6210™ phone.

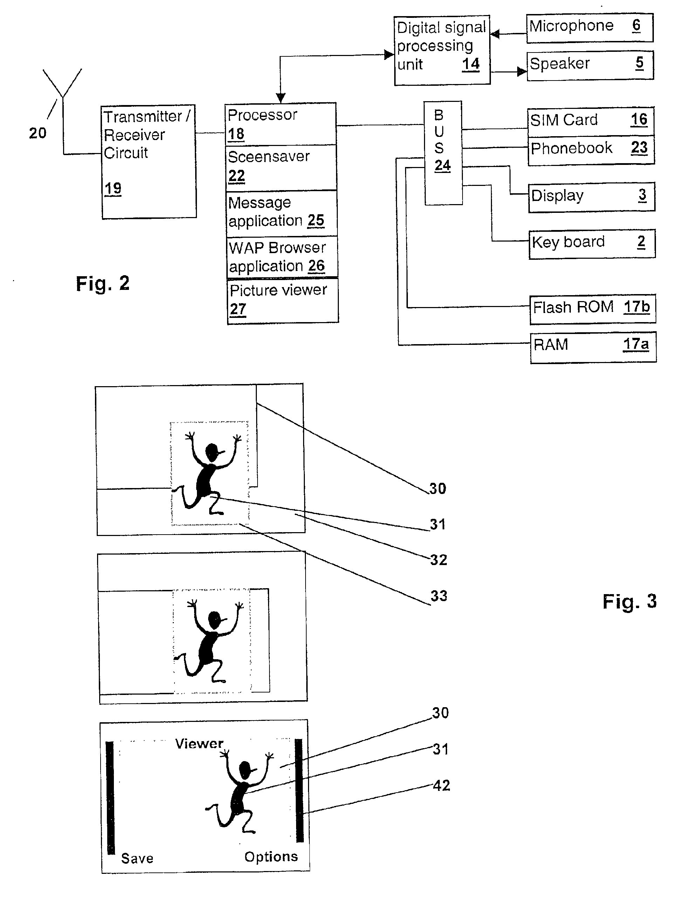

Fig. 2 schematically shows the most important parts of a preferred embodiment of the phone, said parts being essential to the understanding of the invention. A processor 18, which i.a. supports the GSM terminal software, controls the communication with the network via the transmitter/receiver circuit 19 and an antenna 20.

The microphone 6 transforms the user's speech into analogue signals; the signals formed thereby are A/D converted in an A/D converter (not shown) before the speech is encoded in an audio part 14. The encoded speech signal is transferred to the processor 18. The processor 18 is via a bus 24 connected to a RAM memory 17a and a Flash ROM memory 17b, a SIM card 16, the display 3 and the keypad 2 (as well as data, power supply, etc.). A phonebook 23 is furthermore connected to the processor 18 via the bus 24. The phonebook 23 may be stored on the SIM card 16, and/or in the RAM memory 17a. The audio part 14 speech-decodes the signal, which is transferred from the processor 18 to the earpiece 5 via a D/A converter (not shown). The processor controls a screen saver application 22 and a message handling application 25, and a WAP Browser application 26 having an associated picture viewer application 27.

The layout for the alphanumeric keys 7 is shown in table 1.

| 1 | 2 abc | 3 def |
|---|---|---|
| 4 ghi | 5 jkl | 6 mno |
| 7 pqrs | 8 tuv | 9 wxyz |
| * + | 0 ␣ | # ⇑ |

Table 1. Layout of the alphanumeric keys 7.

The communication terminal 1 includes a WAP Browser application 26 supporting an Animated GIF format or a similar picture compression format (using standard formats, including definition of "running times", etc). This also includes support of non-animated GIF pictures.

These animations will be shown "running" whenever accessing a WAP page containing animated GIF's, and they can be scrolled as "normal" pictures (WBMP - Wireless BitMaP).

When browsing, the user has a picture viewer option (View Picture) for viewing all pictures contained in the currently browsed WML deck. This feature is specified for non-animated WBMP pictures, and for the animated (and non-animated) GIF pictures. When viewing animation from this picture viewer, the animation will "run".

From the picture viewer, the users can store/save any of the animations or pictures. When storing animations (or pictures) larger than supported, the phone will provide a "selection border" option, by means of which the user can cut or select the part of the animation that he wants to save. The animation will "run" when doing this. The "selection border" will not be shown when the picture is smaller or equals the supported size. In some applications in the communication terminal the limitation will be 72x28 pixels, while the originally downloaded picture may fit in to the full terminal screen, e.g. 96x60 pixels.

When downloading an image in WML, the file may be associated with a "NoSave" tag, and the terminal may recognise this "NoSave" tag and deem saving of the picture or the animation to be illegal, whereby the terminal changes the menu so the store/save option will be missing.

The animation (potentially truncated in size) will be stored in the phone memory. Up to 5-10 animations should be possible to store (depending on size of animation though, can be less, can be more) with a use of memory corresponding to 1,5 kbyte. If there is no more memory available when storing a new animation, the user is asked to "overwrite" an existing animation. Also, a copy of the <u>first</u> picture in the animation will be stored in the picture message "inbox"; this can be used for sending this picture (not the animation) as a normal picture message based on a single short message (SMS — 160 characters). However when the user accepts to use a concatenated message consisting of several individual SMS messages, the terminal should allow the user to transmit a message including, e.g. 1-1,5 kbyte animation to another user.

When accessing the "Screen saver" setting (as known in Nokia 3310), the user will be allowed to select either one of the per se known still-pictures and as well one of the stored animations as well. When selecting animation, the animation will "run" to show the user how it will look in the idle display.

When the user has selected the animation for the screen saver, the animation will start in idle mode after the specified timeout - just like the existing "still picture" screen savers, known from Nokia 3310, are working. Idle mode the animation in will run a number of times as specified in the setting for the animated GIF file.

Since animations may have defined a very large or indefinite amount of "runs", the animation will however always stop after running a predetermined number times, e.g. 4 times. This is done for power save reasons (this predetermined number times has to be defined after testing power consumption. something like up 50 runs sounds reasonable).

When the animation is stopped in idle, the last picture of the animation will be displayed "permanently"; this last picture will be shown like ordinary non-animated screen savers.

If the animation is stopped, the animation will restart whenever the user presses a key in idle mode - except when keyguard is active. When keyguard is active, a screen saver animation stopped idle mode will not restart when pressing a key, but return to the last picture of the animation after the specified timeout for the screen saver - this is again done for power save reasons, when the phone is e.g. placed in pocket where keys may frequently be pressed accidentally.

From the picture viewer, the user has an option to directly assign an animation (or picture) to become the screen saver for the currently selected profile. In this case, the animation is stored like specified above, but the animation is also assigned to the screen saver of the current profile. When selecting an animation (or picture) this way, the screen saver should be automatically switched on for the current profile (if it was off before). The timeout is unchanged.

According to the invention animations for use in a communication terminal, such as a mobile telephone, may be generated on a personal computer, and downloaded to the communication terminal via a WAP home page, via an SMS gateway available via the Internet or loaded into the communication terminal via a data cable or an IR link between the personal computer and the communication terminal.

According to the preferred embodiment of the communication terminal, the Screen saver application supports the parameters specified in table 2.

Table 2.

| Screen saver application parameters. | |
|---|---|
| Resolution — width x height | 72 x 28 pixels |
| Color resolution | Black and white |
| Number of frames | Maximum 16 |
| Frame duration | Minimum 10/100 sec displayed (i.e. max 10 frames per second displayed). Individual frames may have different duration. |
| Looping | NETSCAPE2.0 (maximum 50 loops displayed) |
| File size | Max 2.5 kbyte<br>• WAP deck size max 2.8 kbyte<br>• Internal representation max e.g. 4kbyte |
| Format | GIF 89a |
| Compression | Any compression is allowed |

The animation will start showing when the phone has been idle for some time. After running the animation in looping mode for e.g. 50 loops the animation will stop. The last frame of the animation will be shown as a static screen saver. This means that the last frame in the animation sequence must be a valid picture in itself.

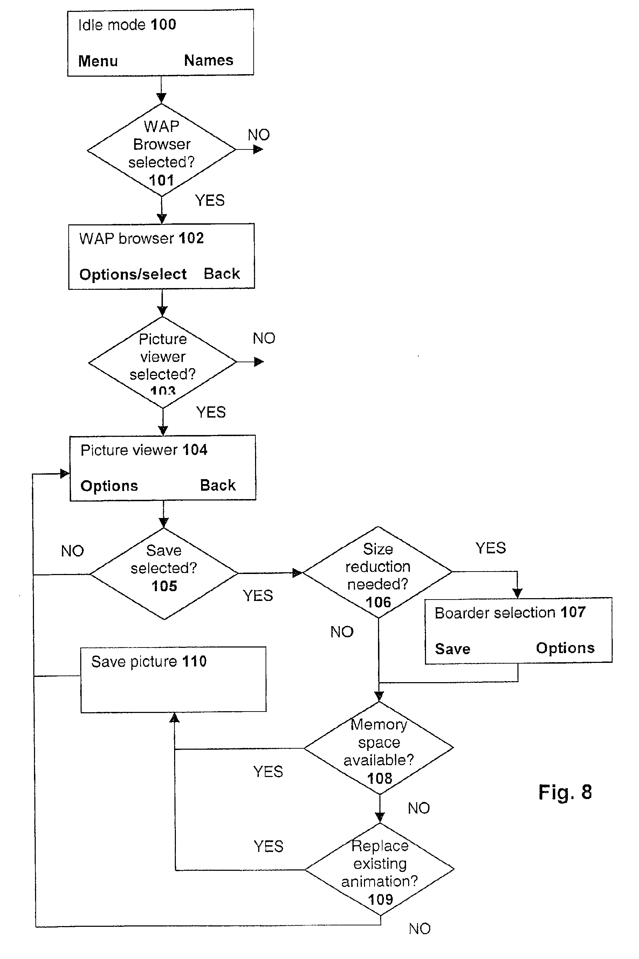

Fig. 8 illustrates how the user from idle mode of the phone 1 in step 100 may have two softkey labels "Menu" and "Names" for the softkeys 8 for giving access to the menu structure and the phonebook database of the phone, respectively.

If the user in step 101 initiates the WAP browser application 26 via the menu of the phone, the WAP browser application 26 will run in step 102. The two softkey labels will be "Option" or "Select" and "Back". By downloading animation as explained above, the animation will run on the display, and the user may select a picture viewer 27 via the selecting the "Option" softkey in step 103.

As mentioned above the user may inspect all pictures in the VML deck in the picture viewer 27 in step 104. The user may select "Save" via the "Option" softkey in step 105, and then the processor in step 106 automatically compares the downloaded animation window 32 in fig. 3 with the allowable animation window 30 set by the phone applications using the animations. These applications may include a screen saver application and a message application by means of which the user may transmit the animation to one of his/her friends.

The user in step 107 is then allowed to move the allowable animation window 30 relatively to the downloaded animation window 32, and according to the preferred embodiment of the phone the allowable animation window 30 is moved step wise by pressing one of the keys "2/abc", "4/ghi", "6/mno" and "8/tuv" for up, left, right and down, respectively. During this step the entire display is preferably occupied by the animation. The start layout corresponds to the first picture in the sequence of fig. 3. During this process the animation 31 will run, so the user will have the possibility to ensure that as much of the area 33 is used for the animation to be inside the allowable animation window 30 as possible. Pressing the "5/jkl" key will select the area currently marked for the allowable animation window 30 as shown in the layout corresponding to the second picture in the sequence of fig. 3.

Hereby the first picture of the animation is displayed in the allowable animation window 30 as shown in the layout corresponding to the third picture in the sequence of fig. 3, with phone icons 42 and soft key label around the allowable animation window 30. If the user confirms to save the animation, the process looks for enough memory space at step 108, and saves the animation at step 110 if the space is available. The user may add a name tag for the animation or edit a suggested name tag if available. If there is not enough free memory space available, the user is invited in step 109 to identify an existing animation to overwrite. If the user does not identify an existing animation for overwriting the phone goes back to the picture viewer at step 104 without saving the animation. Otherwise the animation will be saved and the phone goes back to step 104.

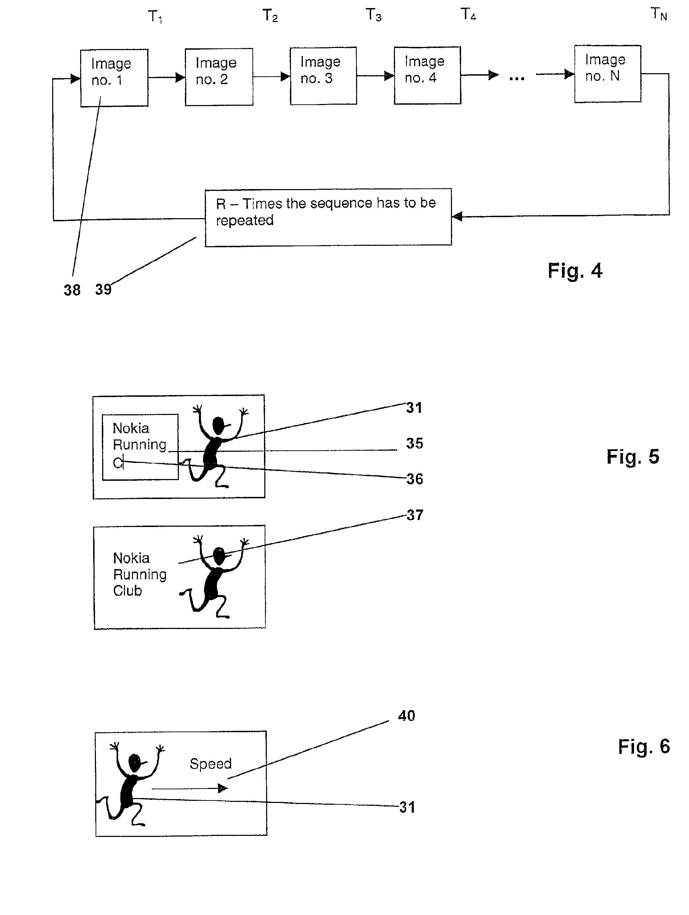

In fig. 4 the structure of the preferred embodiment of the animation is shown. The animation consists according to the preferred embodiment of N (e.g. 8) individual images 38 having a size of 72 x 28 pixel. The format used is GIF or WBMP (one bit black/white for each pixel). During the animation each image stays on the display for a while — preferably for longer than 0.1 sec, and the duration may be set individually for each image or frame. From the picture viewer 27 (step 104) the user is able to inspect already stored animations, and this inspection gives opportunity to individually set the of duration times (refreshing periods) $T_1$-$T_N$, and to the number (R, 39) of loops the animation will run through.

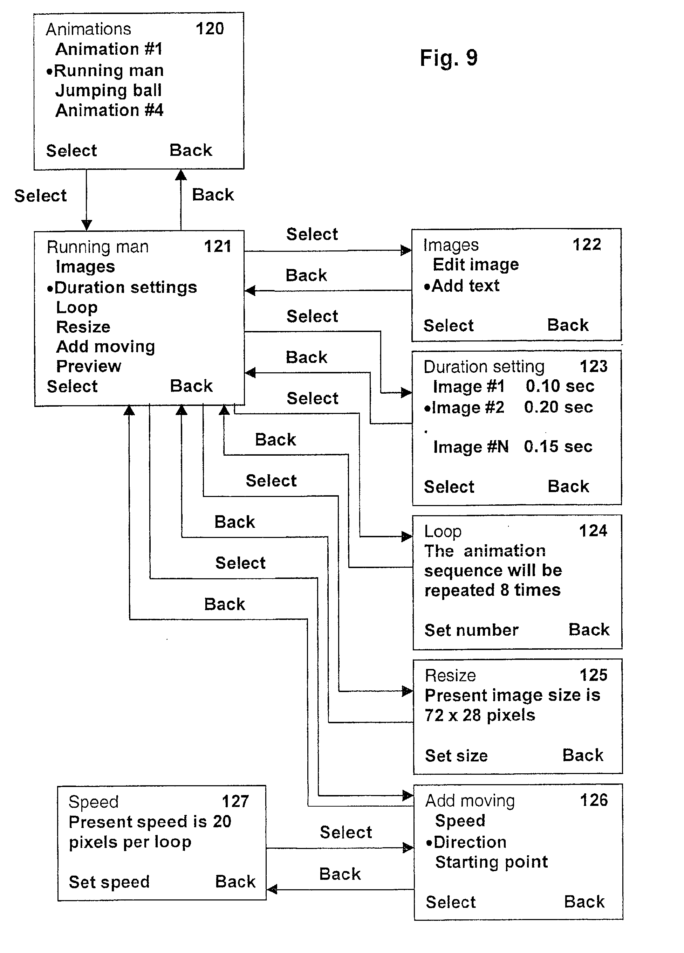

In the following reference is made to fig. 9. According to the preferred embodiment of the invention the animation stored in the phone will be available from the menu. In an "animation" sub menu 120 the user may view the titles of available animations and scroll through the list by using the scroll key 10, and select an animation by pressing the "select" softkey when the desired name is highlighted. When one of the animations, e.g. "Running man", is selected the user may operate on the images, set duration's $T_k$, set the number of loops, resize the image, and add movement to the animation.

When the user has selected to operate on the images, he will enter "images" menu 122.

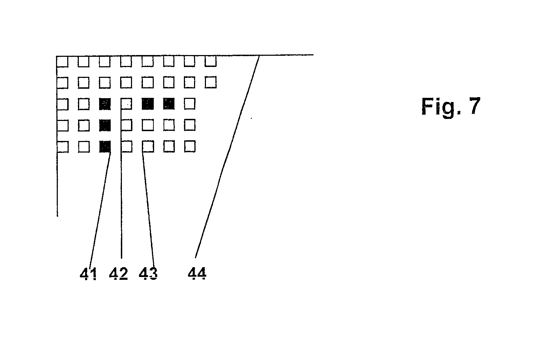

Here the user has an opportunity for pixel-wise editing the images in the animation one by one by entering the "Edit images" menu in the "images" menu 122. Fig 7 is shown in enlarged scale for illustration purposes only. Here the user may operate on individual pixels by moving a blinking pixel cursor 42 step wise by pressing one of the key "2/abc", "4/ghi", "6/mno" and "8/tuv" for up, left, right and down, respectively. By pressing the "5/jkl" key will switch the highlighted pixel from black 41 to white 43 or vice versa. The animation has an outline 44.

Furthermore the user has an opportunity for adding text to the animation by entering the "Add text" menu in the images menu 122. Fig. 5 shows how the user has a possibility to add a preferably stationary text to animation. In practise the text is added to the first image in the sequence and directly copied to the other images in the sequence. This feature is attractive for small groups of people having fun of having a common personalised screen saver on the phone, or individuals having their own name shown on the screen, etc.

When the user has selected to operate duration setting, he will enter "setting menu" 123, where the settings are listed, and the user may select one of the settings and edit the setting. Hereby the animations may be slowed down or speeded up.

In "loop setting" menu 124, the user may set the number of repetitions. In the "resizing menu" 125 user may set a new image size — e.g. in order to save space when sending the animation as a message — and then the phone will go to the resizing window of fig. 3. The smallest window is the moveable one no matter whether the source window or the destination window is smallest.

In "add moving" menu 126 the user may add speed and direction to the animation. Fig. 6 illustrates that the user has the possibility to add a speed vector to the animation sequence by setting a velocity of e.g. moving the animation 20 pixels per animation loop, in one of preferably four directions toward left, right, up and down.

This is done by having the N images in the sequence stored in the Flash ROM 17b and by generating N new images in the RAM memory 17a. If the starting point is outside the left side of the image and the moving direction is toward right, the first new image is fully white and display time is $T_1$. In the next period a number of columns corresponding to the velocity (e.g. 20 pixels per loop sequence) multiplied with the duration of the first image and divided with total duration of the N images.

Displacement D for image m, in loop P

$$D(m,P) = (speed \times \sum^{m} T_k / \sum^{N} T_k) + (P-1) \times speed$$

$T_k$ is the duration of the k'th element in the sequence. For the first loop sequence P will be 1 and the second term will be zero.

When all eight images are stored in the RAM after the first loop sequence, the images are subsequently updated by displacing the pixels with the speed (pixels per loop) in the direction specified.

Finally the user has the possibility to preview the edited animation from the menu 121.

The invention has been described with reference to the WBMP format and the GIF format. However other formats may become relevant when using grey scales and colors in the display.

**Claims**

1. A method of generating an animation by the displaying of sequence of images in a wireless communication terminal, and comprising:

   • editing of at least one of the images in said wireless communication terminal prior to the generating of the animation; and
   • successively displaying said sequence of images in said wireless communication terminal in a predetermined order and with predetermined intervals between the images.

2. A method according to claim 1, wherein the sequence of images is displayed repeatedly for a number of times, a user of the communication terminal sets said number of times the display of the sequence of images is to be repeated.

3. A method according to claim 2, wherein the communication terminal compares said number of times the display of the sequence of images is to be repeated with a predetermined number; and if said number of times the display of the sequence of images is to be repeated exceeds said predetermined number, the communication terminal only repeats the display sequence said predetermined number of times.

4. A method according to claim 3, wherein the communication terminal repeats the display sequence said predetermined number of times once more every time the communication terminal is activated afterwards.

5. A method according to claim 1, wherein the editing of at least one of the images prior to the generating of the animation includes resizing the images into a display size being specific for an application in the communication terminal in which the animation has to be used.

6. A method according to claim 5, wherein the user controls the resizing of only one of the images and the communication terminal automatically resizes the remaining images.

7. A method according to claim 1, wherein the editing of at least one of the images prior to the generating of the animation includes displaying of the images as bit-map pattern, and changing said bit-map pattern under control of a user of the communication terminal, storing the edited image, transferring the changes to the remaining images of the sequence.

8. A communication terminal having a processor, transceiver means for communication via a wireless network, and a display, said processor is adapted to generate an animation in said display by displaying the sequence of images, and comprising in said wireless communication terminal:

- means for editing of at least one of the images prior to the generating of the animation; and
- means for successively displaying said sequence of images in a predetermined order and with predetermined intervals between the images.

9. A communication terminal according to claim 8, wherein the sequence of images is displayed repeatedly for a number of times, and said communication terminal has means for setting the number of times the display of the sequence of images has to be repeated.

10. A communication terminal according to claim 9, wherein the processor is operable to compare the number of times the display of the sequence of images is to be repeated with a predetermined number; and if the processor deems that the number of times the display of the sequence of images is to be repeated exceeds said predetermined number, the processor is operable to only repeat the display sequence said predetermined number of times.

11. A communication terminal according to claim 10, wherein the processor is operable to repeat the display sequence said predetermined number of times once more every time the communication terminal is activated afterwards.

12. A communication terminal according to claim 8, wherein the processor is operable to provide a preview window in the display by means of which the user may edit at least one of the images prior to the generation of the animation, and said editing includes resizing the images into a display size being specific for an application in the communication terminal in which the animation has to be used.

13. A communication terminal according to claim 12, wherein the user, by means of the preview window in the display, is able to control the resizing of only one of the images and the communication terminal is operable to automatically resize the remaining images.

14. A communication terminal according to claim 8, wherein the user, by means of the preview window in the display, may edit at least one of the images prior to the generating of the animation, includes means for displaying of the images as bit-map pattern, and means for changing said bit-map pattern under control of the user of the communication terminal, means for storing the edited image, and means for transferring the changes to the remaining images of the sequence.

**Fig. 1**

Digital signal processing unit **14**

Microphone **6**

Speaker **5**

**20**

Transmitter / Receiver Circuit

**19**

Processor **18**

Sceensaver **22**

Message application **25**

WAP Browser application **26**

Picture viewer **27**

B U S **24**

SIM Card **16**

Phonebook **23**

Display **3**

Key board **2**

Flash ROM **17b**

RAM **17a**

**Fig. 2**

30

31

32

33

**Fig. 3**

Viewer

30

31

42

Save

Options

$T_1$  $T_2$  $T_3$  $T_4$  $T_N$

| Image no. 1 | Image no. 2 | Image no. 3 | Image no. 4 | ... | Image no. N |

R – Times the sequence has to be repeated

38  39

**Fig. 4**

Nokia Running Cl

31
35
36

**Fig. 5**

Nokia Running Club

37

Speed

40
31

**Fig. 6**

Fig. 7

41  42  43      44

Idle mode **100**

**Menu**        **Names**

WAP Browser selected? **101** — NO →

YES ↓

WAP browser **102**

**Options/select**    **Back**

Picture viewer selected? **103** — NO →

YES ↓

Picture viewer **104**

**Options**       **Back**

NO — Save selected? **105** — YES → Size reduction needed? **106** — YES → Boarder selection **107**

**Save**      **Options**

NO

Save picture **110**

Memory space available? **108**

YES

NO

Replace existing animation? **109**

YES

NO

**Fig. 8**

Fig. 9

Animations      120
  Animation #1
  •Running man
  Jumping ball
  Animation #4

Select        Back

Select

Back

Running man     121
  Images
  •Duration settings
  Loop
  Resize
  Add moving
  Preview
Select        Back

Select

Back

Select

Back

Select

Back

Select

Back

Select

Back

Select

Back

Images       122
  Edit image
  •Add text

Select        Back

Duration setting    123
  Image #1    0.10 sec
  •Image #2    0.20 sec

  Image #N    0.15 sec

Select        Back

Loop        124
The animation
sequence will be
repeated 8 times

Set number       Back

Resize       125
Present image size is
72 x 28 pixels

Set size       Back

Speed       127
Present speed is 20
pixels per loop

Set speed       Back

Add moving     126
  Speed
  •Direction
  Starting point

Select        Back

Select

Back